**Europäisches Patentamt**

(19) **European Patent Office**

**Office européen des brevets**

(11) Numéro de publication: **0 047 750**
**B1**

(12) # FASCICULE DE BREVET EUROPEEN

(45) Date de publication du fascicule du brevet:
18.04.84

(51) Int. Cl.³: **F 16 L 13/14,** B 21 D 39/04

(21) Numéro de dépôt: **81900510.9**

(22) Date de dépôt: **24.02.81**

(86) Numéro de dépôt international:
**PCT/FR 81/00021**

(87) Numéro de publication internationale:
**WO 81/02460 (03.09.81** Gazette 81/21)

(54) **ASSEMBLAGE BOUT A BOUT DE DEUX TUBES PAR MANCHON VA-ET-VIENT EMBOITE A FORCE.**

(30) Priorité: **28.02.80 FR 8004856**

(43) Date de publication de la demande:
**24.03.82 Bulletin 82/12**

(45) Mention de la délivrance du brevet:
**18.04.84 Bulletin 84/16**

(84) Etats contractants désignés:
**DE GB NL**

(56) Documents cités:
**FR - A - 1 102 168**
**FR - A - 2 176 236**
**FR - A - 2 356 463**
**GB - A - 816 926**
**US - A - 1 507 138**

(73) Titulaire: **CEGEDUR SOCIETE DE TRANSFORMATION DE L'ALUMINIUM PECHINEY, 66, Avenue Marceau, F-75361 Paris Cédex 08 (FR)**

(72) Inventeur: **COLAS, François, 10, Avenue du Petit Chambord, F-92340 Bourg La Reine (FR)**

(74) Mandataire: **Pascaud, Claude et al, PECHINEY 28, rue de Bonnel, F-69433 Lyon Cedex 3 (FR)**

Assemblage bout a bout de deux tubes par manchon va-et-vient emboite a force

L'objet de la présente invention concerne un procédé d'assemblage bout à bout de deux tubes métalliques, en particulier en aluminium on ses alliages, de même diamètre extérieur, au moyen d'un manchon de raccordement comportant un alésage cylindrique de diamètre inférieur au diamètre extérieur des tubes. Voir par ex. le US-A-1 507 138.

Lorsqu'on veut assembler bout à bout deux tubes fixes ou un ajutage présent dans une machine avec un tube fixe, ou encore lorsque ces tubes ont une longueur telle qu'ils sont difficilement maniables, ou que l'on veut remplacer une longueur usée dans une canalisation, ou encore lorsque l'on veut assembler des tubes avec des raccords tubulaires multidirectionnels, dans tous ces cas donc, on sait pratiquer des soudures bout à bout ou disposer des manchons libres qui seront collés ou brasés ou soudés, mais, on ne peut utiliser des manchons coniques sans jeu.

Or, l'on connaît une technique d'assemblage des tubes suivant le FR-A-2 356 463 dans lequel l'assemblage se fait sur partie cylindrique tétreinte par emboîtement à force d'un tube dans l'autre. Cette technique exige le mouvement relatif d'un tube par rapport à l'autre, dans le sens axial. De même, le US-A-1 507 138 décrit une méthode d'assemblage bout à bout de 2 tubes à l'aide d'un manchon intermédiaire, méthode dans laquelle les 2 tubes sont évasés (expansion radiale) par poussée axiale des tubes (ou de l'un, puis l'autre tube) dans le manchon, en raison de la présence d'une collerette interne (12) biseautée (13, 14), l'extrémité des tubes comportant un chanfrein (19) correspondant. Cette technique exige également un mouvement relatif de rapprochement des tubes (17, 18) à assembler, dans le sens axial, lors de l'asemblage.

Contrairement aux enseignments de l'art antérieur l'invention telle qu'elle est caractérisée dans la revendication 1, résout le problème consistant à assembler mécaniquement deux tubes immobiles l'un par rapport à l'autre dans le sens axial, lors de l'assemblage proprement dit. Des modes particuliers de réalisation de l'invention apparaîent dans les revendications dépendantes.

L'emboîtement ou l'enfilage selon l'invention se fait par tout moyen connu, tel qu'une pince à mors cylindriques enserrant, d'une part, une portion du tube, et, d'autre part, une portion du manchon. Sie le manchon est mince et risque de se dilater, on l'enserre dans une matrice indéformable. Ainsi, le premier tube se rétreint lors de l'emboîtement à force sans que le manchon se dilate, au moins de façon appréciable, ceci de façon analogue au processus décrit dans le FR-A-2 356 463. On présente alors le deuxième tube en alignement sensiblement bout à bout avec le premier, son extrémité chanfreinée en vis-à-vis avec celle du premier qui s'est rétreinte par passage à travers le manchon. Le second tube peut être aligné bout à bout avec le premier aussi bien par déplacement latéral que longitudinal.

On maintient les deux tubes immobiles, on recule le manchon par rapport au premier tube dont une portion rétreinte se dégage de la partie de diamètre interne minimal du manchon, tandis que l'extrémité du deuxème tube se trouve emboîtée à force dans le manchon. On avance le machon jusqu'à ce que les extrémités des deux tubes en vis-à-vis se trouvent sensiblement au milieu de la partie centrale ou l'alésage de diamètre minimal du manchon.

Le manchon utilisé pour l'assemblage des deux tubes possède un seul alésage cylindrique de diamètre intérieur minimal, ce diamètre étant inférieur au diamètre extérieur initial des deux tubes, et de longueur au moins égale au double de ce diamètre. Cet alésage peut être prolongée à chaque extrémité par une portée conique allant en s'évasant jusqu'à un diamètre au moins égal au diamètre extérieur des tubes.

L'angle des génératrices de cette portée conique avec l'axe du manchon est de préférence de l'ordre de 7°.

De préférence, l'un de ces portées coniques est prolongé par un alésage cylindrique dont le diamètre intérieur est légèrement supérieur à celui des tubes, ce diamètre étant égal au diamètre extérieur des tubes majoré d'un jeu permettant l'introduction facile sans frottement, ou à frottement doux, de l'un ou l'autre tube, cet alésage cylindrique en prolongement ayant une longueur au moins égale à la moitié de l'alésage de diamètre minimal du manchon. Chacun des deux tubes est assemblé par emboîtement à force de part et d'autre du manchon, chacun sensiblement jusqu'au milieu de l'alésage de diamètre minimal. L'extrémité de chacun des tubes, devant se trouver emboîtée bout à bout dans le manchon, a été au préalable chanfreinée coniquement avec un angle de l'ordre de 7°.

L'invention sera mieux comprise par la description ci-après d'un exemple de réalisation illustré par des figures.

La figure 1 représente un manchon positionné devant l'un des tubes présenté en alignement avant d'être emboîté à force dans celui-ci. L'autre tube, non représenté, est supposé suffisamment écarté pour permettre le positionnement du manchon.

La figure 2 représente le manchon dans lequel le premier tube est emboîté à force jusqu'à affleurement à l'extrémité opposée.

La figure 3 représente le deuxième tube aligné avec le manchon immobilisé dans le prolongement du premier tube précédemment emboîté. Le deuxième tube est prêt à être emboîté lui-même dans le manchon par un mouvement de recul de celui-ci par rapport au premier tube tandis que les deux tubes restent immobiles.

La figure 4 représente les deux tubes définitivement emboîté en vis-à-vis.

La figure 5 représente un exemple d'assemblage obtenu avec des tubes bimétalliques et un manchon réalisé dans le même métal que la couche interne des tubes.

Les figures 6 et 7 représentent une variante possible de réalisation et correspondent respectivement aux figures 3 et 4 dans le cas où le diamètre minimal interne du manchon a une dimension inférieur au diamètre interne du second tube à assembler.

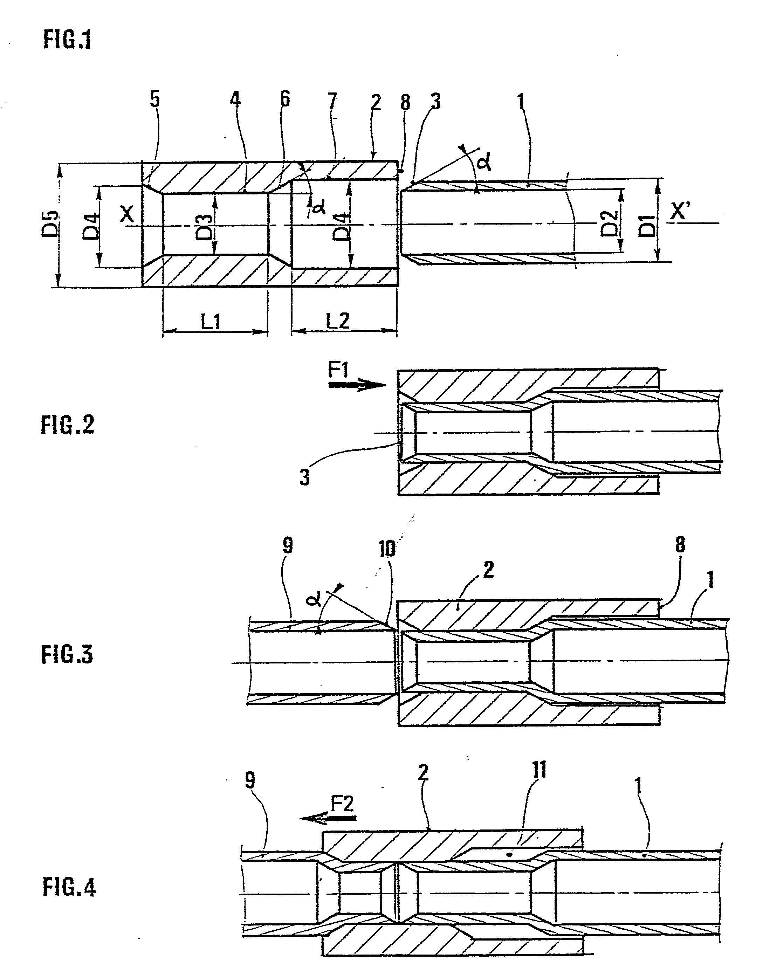

En figure 1, on voit un tube (1) en aluminium de diamètre extérieur $D_1 = 18$ mm, et de diamètre intérieur $D_2 = 16$ mm, qui est présenté en alignement d'un manchon (2) également en aluminium.

L'extrémité (3) du tube (1) est chanfreinée mâle selon un angle $\alpha$ avec l'axe du tube de 7°.

Le manchon (2) comporte une partie centrale cylindrique (4) de diamètre minimal $D_3$ inférieur à $D_1$, ici $D_3 = 16$ mm. Cette partie cylindrique a une longueur $L_1 = 40$ mm. Elle se prolonge à chaque extrémité par des alésages coniques (5–6) dont les génératrices font, avec l'axe XX' du manchon, un angle $\alpha$ de 7°. L'un des alésages coniques (6) est lui-même prolongé par une partie cylindrique (7) de diamètre intérieur $D_4 = 18,2$ mm.

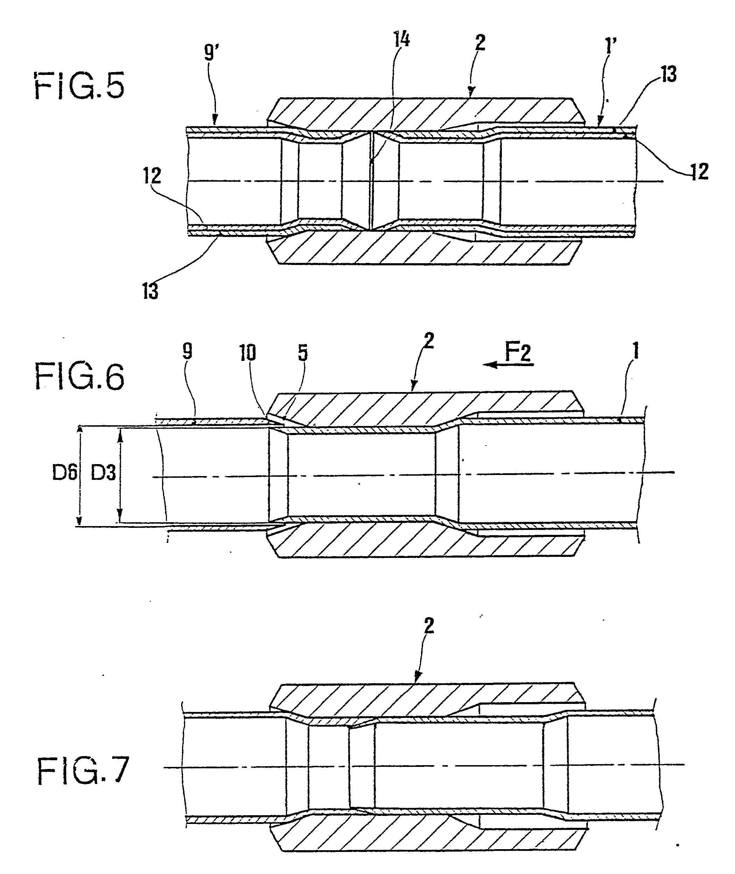

La partie cylindrique (7) de plus grand diamètre intérieur a une longueur $L_2 = 22$ mm supérieur à $1/2\ L_1$. Le diamètre extérieur $D_5$ du manchon (2) est de 20 mm. L'extrémité (8) de cette partie cylindrique (7) peut être utilisée comme épaulement pour repousser axialement le manchon. Pour des raisons d'esthétique ou de meilleure résistance mécanique, les deux extrémités du manchon (2) peuvent être chanfreinées comme représenté dans les figures 6 et 7.

On évite ainsi les variations brusques de diamètre aux extrémités du manchon.

En figure 2, le manchon (2) a été poussé à la rencontre du tube (1) dans le sens de la flèche $F_1$, en obligeant le tube (1) à pénétrer d'abord sans difficulté dans la partie cylindrique (7) de diamètre $D_4$ supérieur à $D_1$, puis, en se rétreignant dans la partie cylindrique centrale (4) de diamètre réduit $D_3$. Le manchon a été poussé jusqu'à ce que l'extrémité (3) du tube (1) affleure l'extrémité du manchon du côté de la partie conique (5).

En figure 3, l'autre tube (9) est aligné dans le prolongement du tube (1). Il est présenté de façon à affleurer bout à bout l'extrémité rétreinte du premier tube. Son extrémité (10) est chanfreinée coniquement selon un même angle $\alpha$ que le premier tube (1). Pour la clarté du dessin, les extrémités en vis-à-vis des deux tubes ont été représentées à une légère distance l'une de l'autre, mais, autant que possible, les deux tubes sont mis bout à bout.

En figure 4, le manchon (2) a été repoussé dans le sens $F_2$ opposé à $F_1$ d'une longueur un peu supérieure à $1/2\ L_1$ en sorte que les extrémités des deux tubes (1) et (9) se trouvent vis-à-vis sensiblement au milieu de la partie centrale (4) du diamètre minimal. Les deux tubes se trouvent solidement assemblés bout à bout par le manchon (2).

On constate que, au cours des opérations successives d'emboîtement à force des deux tubes, les conicités des extrémités (3–10) des deux tubes (1–9) se sont inversées et transformées en embouchures évasées. Ceci est conforme aux enseignements du FR-A-2 356 463. La déformation des sections successives de chaque tube varie en fonction de l'épaisseur correspondante.

Le retrait du manchon dans le sens $F_2$ a dégagé sensiblement la moitié de la longueur rétreinte du tube (1) hors de la partie centrale (4) de diamètre rétreinte du manchon.

On a un volume annulaire creux (11) autour du tube (1). Ce volume creux est heureusement protégé par le prolongement (7) du manchon (2).

Dans le cas représenté, la partie (4) de diamètre intérieur minimal du manchon a une épaisseur relativement forte et est réalisée en une nuance d'aluminium moins ductile que les tubes (1–9). Le manchon (2) ne se dilate pas au cours des emboîtements à force.

Lorsque cela est nécessaire, pour des manchons plus minces, on les enserre dans une matrice résistante.

Sur la figure 5 est représenté l'assemblage selon l'invention de deux tubes bimétalliques. On constate que, conformément aux enseignements du FR-A-2 356 463, les extrémités chanfreinées mâles des deux tubes (1') et (9') se sont rétreintes et transformées en alésage conique formant des embouchures femelles.

Les couches internes (12) s'évasent à l'extrémité de chaque tube et forment une lèvre qui protègent les couches externes (13) du contact avec le fluide se trouvant à l'intérieur des tubes (1'–9'). Si, comme représenté sur la figure 5, le manchon (2) est réalisé dans un métal semblable à celui des couches internes (12), le fluide reste en tout point au contact d'un métal compatible, ceci même s'il y a un intervalle (14) entre les extrémités des deux tubes (1'–9')

Le dispositif d'assemblage selon l'invention, peut être utilisé pour l'assemblage de cadres émaillés, par exemple des cadres de bicyclettes. Ces cadres de bicyclettes sont constitués de tubes assemblés par quatre raccords multiples. Chaque raccord comporte des embouts tubulaires se présentant en prolongement des tubes à assembler. On dispose les quatre raccords sur un montage de façon à les fixer tous quatre à leurs positions relatives définitives. On enfonce à chaque extrémité des tubes un manchon (2) jusqu'à affleurer l'extrémité du tube comme représenté en figure 2. On présente les tubes entre les raccords. L'extrémité de chaque tube affleure l'extrémité de l'embout correspondant d'un raccord multiple, ceci comme représenté en figure 3 où l'extrémité de l'embout serait dans la position du tube (9).

Au moyen de système de vérins adéquat, les manchons (2) sont poussés en direction des raccords et prennent une position correspondant à la figure 4. L'assemblage de tous les tubes et raccords peut être effectué simultanément en une seule opération très rapide. Du mastic ou de la peinture vient protéger de la corrosion les interstices (11).

Le dispositif d'assemblage objet de l'invention, permet d'assembler tout ensemble complexe de tuyauteries et raccords multidirectionnels, la bicyclette n'étant qu'un exemple indicatif.

Ce dispositif est particulièrement intéressant lorsque les tubes (1–9) ne peuvent se déplacer axialement, mais seulement latéralement, par exemple des tubes dans une tranchée ou des tubulures de réservoir. Le dispositif est encore utilisable même si les tubes (1) et (9) sont ovalisés.

A la limite, on peut utiliser des manchons (2) eux-mêmes ovalisés et même des tubes à section polygonale, à condition d'utiliser des manchons à section correspondante.

Les figures 6 et 7 correspondent à une variante de réalisation de l'assemblage où le diamètre interne minimal $(D_3)$ du manchon (2) est inférieur au diamètre intérieur $(D_6)$ du second tube (9), tandis qu'un léger déplacement axial de l'un des tubes au moins est possible. De ce fait, l'extrémité du tube (1), après rétreint par passage dans le manchon (2) peut pénétrer à l'intérieur du tube (9). Lors de l'opération de présentation du tube (9) dans l'alignement du tube (1), au lieu de faire affleurer les deux tubes en vis-à-vis comme représenté en figure 3, on peut avancer un peu plus le tube (9) et le faire pénétrer légèrement dans l'alésage conique (5) du manchon. On a ainsi un certain recouvrement des deux tubes, comme représenté en figure 6.

Lorsque le manchon (2) est repoussé selon $(F_2)$ de la même façon qu'en figure 4, l'extrémité (10) du tube (9) se contracte et pince l'extrémité amincie de l'autre tube (1) comme représenté en figure 7. On a un assemblage avec emboîtement à force de l'extrémité du tube (1) dans l'extrémité du tube (9), d'où une tenue mécanique et une étanchéité encore améliorées par cette liaison directe des deux tubes.

**Revendications**

1, Procédé d'assemblage bout à bout de deux tubes métalliques (1, 9), en particulier en aluminium ou ses alliages, de mêmes diamètre extérieur D1 à l'aide d'un manchon de raccordement (2) comportant un alésage cylindrique (4) de diamètre D3 inférieur au diamètre extérieur D1, des tubes, caractérisé en ce que: a) le manchon (2) est enfilé axialement sur le premier tube (1) dans un premier sens F1, de manière à rétreindre ce tube (1) dans l'alésage (4) du manchon (2), jusqu'à ce que son extrémité libre (3) affleure à l'extrémité libre du manchon; b) le deuxième tube (9) est disposé coaxialement avec le premier (1) de manière à ce que son extrémité (10) soit en face et à proximité immédiate de l'extrémité rétreinte (3) de ce premier tube (1); c) le manchon (2) est alors mû axialement dans le sens F2 inverse au premier sens F1 de manière à rétreindre le deuxième tube (9) dans l'alésage (4) du manchon (2), les deux tubes (1, 9) restant immobiles l'un par rapport à l'autre pendant ce mouvement de sorte que le manchon (2) libère une partie de la longueur rétreinte du premier tube (1).

2. Procédé selon la revendication 1, caractérisé en ce que le manchon est mû dans le sens inverse F2 jusqu'à ce que l'extrémité (2) du deuxième tube (9) se trouve sensiblement au milieu de l'alésage (4) de diamètre minimal $D_3$ du manchon.

3. Procédé selon revendication 1 ou 2, caractérisé en ce que, avant enfilage les extrémités (3, 10) de chacun des tubes (1, 9) sont chanfreinées coniquement selon un angle $\alpha$, de préférence de l'ordre de 7°.

4. Procédé selon l'une des revendications 1 à 3, caractérisé en ce que l'on donne au diamètre interne minimal $D_3$ du manchon une dimension inférieure au diamètre interne $D_6$ du second tube (9) et que, lors de l'opération d'alignement de ce tube (9) avec le premier (1), on avance légèrement le tube (9), à l'intérieur d'une portée conique d'extrémité (5) du manchon.

5. Manchon pour la mise en œuvre du procédé selon la revendication 3, caractérisé en ce qu'il comporte un seul alésage cylindrique de diamètre $D_3$ inférieur au diamètre extérieur D1 des tubes et supérieur au diamètre interne D2 des tubes.

6. Manchon pour la mise en œuvre du procédé selon l'une des revendications 1 à 4, caractérisé en ce qu'il comporte au moins un alésage cylindrique (4) de diamètre $D_3 < D_1$, et de longueur $L_1$ au moins égale à deux fois le diamètre extérieur initial D1 des tubes (1, 9) et adjacent à deux portées coniques d'extrémité (5, 6) dont le diamètre de l'ouverture $(D_4$ est au moins égal au diamètre extérieur D1 des tubes.

7. Manchon selon la revendication 6, caractérisé en ce que l'une des portées coniques (6) est prolongée par un alésage cylindrique (7) coaxial dont le diamètre $D_4$ est légérement supérieur au diamètre extérieur $D_1$ des tubes (1, 9).

8. Manchon selon la revendication 7, caractérisé en ce que la longueur $L_2$ de l'alésage (7) est supérieure à la moitié de la longueur $L_1$ de l'alésage (4).

**Patentansprüche**

1. Verfahren zum Aneinanderfügen zweier Metallrohre (1, 9), insbesondere aus Aluminium oder Aluminiumlegierungen, gleichen Aussendurchmessers D1, mit geradem Stoss, mittels einer Verbindungsmuffe (2), deren Bohrung (4) einen kleineren Durchmesser D3 als den Aussendurchmesser D1 der Rohre (1, 9) hat, dadurch gekennzeichnet, dass

a) die Muffe (2) in einer ersten Richtung F1 auf das erste Rohr (1) geschoben wird, um dieses Rohr (1) in der Bohrung (4) der Muffe (2) einzuhalsen, bis dessen freies Ende (3) glatt mit dem freien Ende der Muffe (2) abschliesst;

b) das zweite Rohr (9) koaxial so zum ersten Rohr (1) angeordnet wird, dass sein Ende (10) dem eingehalsten Ende (3) des ersten Rohres (1) unmittelbar gegenüberliegt;

c) die Muffe (2) dann axial in der zur ersten Richtung F1 entgegengesetzten Richtung F2 bewegt wird, um das zweite Rohr (9) in die Bohrung (4) der Muffe (2) so einzuhalsen, dass die Muffe (2) einen Teil der eingehalsten Länge des ersten Rohres (1) freigibt, wobei während dieser Bewegung die beiden Rohre (1, 9) relativ zueinander nicht bewegt werden.

2. Verfahren nach Anspruch 1, dadurch gekennzeichnet, dass die Muffe (2) in der umgekehrten Richtung F2 solange bewegt wird, bis das Ende (10) des zweiten Rohres (9) sich ungefähr in der Mitte der Bohrung (4) mit einem minimalen Durchmesser D3 der Muffe (2) befindet.

3. Verfahren nach Anspruch 1 oder 2, dadurch gekennzeichnet, dass vor dem Aufschieben die Enden (3, 10) jedes Rohres (1, 9) unter einem Winkel α von vorzugsweise etwa 7° konisch abgeschrägt werden.

4. Verfahren nach einem der Ansprüche 1 bis 3, dadurch gekennzeichnet, dass man den minimalen Innendurchmesser D3 der Muffe (2) kleiner als den Innendurchmesser D6 des zweiten Rohres (9) dimensioniert und dass man, während der Ausrichtung dieses Rohres (9) mit dem ersten Rohr (1), das Rohr (9) etwas in das Innere einer konischen Öffnung des Endes (5) der Muffe (2) vorschiebt.

5. Muffe zur Durchführung des Verfahrens nach Anspruch 3, dadurch gekennzeichnet, dass sie eine einzige Zylinderbohrung mit einem Durchmesser D3 aufweist, der kleiner als der Aussendurchmesser D1 der Rohre (1, 9) und grösser als deren Innendurchmesser D2 ist.

6. Muffe zur Durchführung des Verfahrens nach einem der Ansprüche 1 bis 4, dadurch gekennzeichnet, dass sie mindestens eine Zylinderbohrung (4) mit einem Durchmesser D3 < D1 und einer Länge L1, die mindestens gleich dem doppelten ursprünglichen Aussendurchmesser D1 der Rohre (1, 9) ist, aufweist, an die zwei konische Endöffnungen (5, 6) angrenzen, deren Öffnungsdurchmesser D4 mindestens gleich dem Aussendurchmesser D1 der Rohre ist.

7. Muffe nach Anspruch 6, dadurch gekennzeichnet, dass eine der konischen Öffnungen (6) durch eine koaxiale Zylinderbohrung (7) verlängert ist, deren Durchmesser D4 etwas grösser als der Aussendurchmesser D1 der Rohre (1, 9) ist.

8. Muffe nach Anspruch 7, dadurch gekennzeichnet, dass die Länge L2 der Bohrung (7) grösser ist als die Hälfte der Länge L1 der Bohrung (4) ist.

**Claims**

1. A process for butt joining two metal tubes (1,9) in particular of aluminium or alloys thereof, of the same outside diameter D1 by means of a connecting sleeve (2) having a bore (4) which is of a diameter D3 which is less than the outside diameter D1 of the tubes, characterised in that:

a) the sleeve (2) is axially fitted on to the first tube (1) in a first direction (F1), so as to constrict said tube (1) in the bore (4) of the sleeve (2), until its free end (3) is flush with the free end of the sleeve;

b) the second tube (9) is disposed coaxially with the first tube (1) such that its end (10) is facing and in the immediate vicinity of the constricted end (3) of said first tube (1); and c) the sleeve (2) is then moved axially in the opposite direction F2 to the first direction F1 so as to constrict the second tube (9) in the bore (4) of the sleeve (2), the two tubes (1, 9) remaining stationary relative to each other during said movement whereby the sleeve (2) frees a part of the constricted length of the first tube (1).

2. A process according to claim 1 characterised in that the sleeve is moved in the opposite direction F2 until the end (2) of the second tube (9) is disposed substantially at the middle of the bore (4) of minimum diameter D3, of the sleeve.

3. A process according to claim 1 or claim 2 characterised in that, before the operation of fitting the tubes in the sleeve, the ends (3, 10) of each of the tubes (1, 9) are conically chamfered at an angle α, preferably of the order of 7°.

4. A process according to one of claims 1 to 3 characterised in that the minimum inside diameter D3 of the sleeve is of a dimension which is less than the inside diameter D6 of the second tube (9) and that, in the operation of aligning said tube (9) with the first tube (1), the tube (9) is advanced slightly within a conical end surface portion (5) of the sleeve.

5. A sleeve for carrying out the process according to claim 3 characterised in that it comprises a single cylindrical bore which is of a diameter D3 that is smaller than the outside diameter D1 of the tubes and larger than the inside diameter D2 of the tubes.

6. A sleeve for carrying out the process according to one of claims 1 to 4 characterised in that it comprises at least one cylindrical bore (4) of a diameter $D3 < D1$ and of a length $L_1$ that is at least twice the initial outside diameter D1 of the tubes (1, 9), and adjacent to two conical and surface portions (5, 6), the diameter D4 of the opening thereof being at least equal to the outside diameter D1 of the tubes.

7. A sleeve according to claim 6 characterised in that one of the conical surface portions (6) is extended by a coaxial cylindrical bore (7), the diameter D4 of which is slightly larger than the outside diameter D1 of the tubes (1,9).

8. A sleeve according to claim 7 characterised in that the length L2 of the bore (7) is greater than half the length L1 of the bore (4).

FIG.1

FIG.2

FIG.3

FIG.4

FIG.5

FIG.6

FIG.7